# EUROPEAN PATENT APPLICATION

(11) **EP 4 498 229 A1**
(43) Date of publication of application: **29.01.2025**
(21) Application number: 24190126.3
(22) Date of filing: 22.07.2024
(51) Int. Cl.: G06F 8/30, G06F 8/34

(54) **INFORMATION PROCESSING APPARATUS, INFORMATION PROCESSING METHOD, AND PROGRAM**

(30) Priority: 24.07.2023 JP 2023120260
(71) Applicant: Yokogawa Electric Corporation, Tokyo 180-8750 (JP)
(72) Inventor: ARIYOSHI, Masanobu, Tokyo, 180-8750 (JP)
(74) Representative: Zimmermann, Tankred Klaus

(57) **Abstract**

It would be helpful to provide an information processing apparatus that makes a program in a block program language understood more easily. An information processing apparatus 10, which is configured to support at least one of the creation or execution of a program in a block programming language, includes a controller 13. The controller 13 is configured to acquire the program that includes one or more step blocks, each as one of functional blocks. Each of the step blocks collectively associates a part of processes, among a series of processes based on the program. The series of processes is executed in accordance with a state transition from one of the step blocks to another of the step blocks.

## Description

### CROSS-REFERENCE TO RELATED APPLICATION

This application claims priority to Japanese Patent Application No. 2023-120260, filed on July 24, 2023, the entire contents of which are incorporated herein by reference.

### TECHNICAL FIELD

The present disclosure relates to an information processing apparatus, an information processing method, and a program.

### BACKGROUND

Technology for supporting programming is known. For example, Patent Literature (PTL) 1 discloses a programming support tool that incorporates puzzle-like elements and allows users to learn programming naturally while having fun. In addition, block programming languages that allow users to construct programs through intuitive operations are known.

### CITATION LIST

### Patent Literature

PTL 1: JP 2022-178061 A

### SUMMARY

However, conventional technology has room for improvement in terms of making programs in block programming languages understood more easily.

It would be helpful to provide an information processing apparatus, an information processing method, and a program that make a program in a block program language understood more easily.

An information processing apparatus according to some embodiments is an information processing apparatus configured to support at least one of the creation or execution of a program in a block programming language, the information processing apparatus including:
a controller configured to acquire the program that includes one or more step blocks, each as one of functional blocks, each of the step blocks collectively associating a part of processes among a series of processes based on the program, the series of processes being executed in accordance with a state transition from one of the step blocks to another of the step blocks.

This makes the program in the block programming language understood more easily. By acquiring the program including the step blocks, each as one of the functional blocks, the information processing apparatus introduces the concept of "steps" into block programming, thus allowing the program to be visualized more simply. The program is not expressed in a series from the start to the end, but rather by subsets as steps. Therefore, even when the entire program becomes large, the program is less likely to be nested too deep.

In the information processing apparatus according to one embodiment, each of the step blocks may be associated with a first functional block that indicates a transition condition required for the state transition. Therefore, in the program acquired by the information processing apparatus, it is possible to specify the condition to make the state transition of the program from one of the step blocks to another of the step blocks.

In the information processing apparatus according to one embodiment, each of the step blocks may be associated with multiple first functional blocks to be determined in accordance with a logical operation of AND or OR. Therefore, in the program acquired by the information processing apparatus, it is possible to specify an AND or OR condition to make the state transition of the program from one of the step blocks to another of the step blocks.

In the information processing apparatus according to one embodiment, each of the step blocks may be associated with a second functional block that indicates a transition process to be executed before the state transition. Therefore, in the program acquired by the information processing apparatus, it is possible to specify the process immediately before the state transition of the program from one of the step blocks to another of the step blocks.

In the information processing apparatus according to one embodiment, each of the step blocks may include a step number that indicates order in the series of processes. This allows a user to easily understand what step number a certain step block corresponds to in the series of processes.

In the information processing apparatus according to one embodiment, each of the step blocks may include a step number of a next step block that executes a process subsequently to the state transition. Therefore, in the program acquired by the information processing apparatus, it is possible to specify a transition destination in the state transition of the program from one of the step blocks to another of the step blocks. When a transition condition is satisfied at each step, the controller of the information processing apparatus can execute a specified transition process and move the process to the next step.

In the information processing apparatus according to one embodiment, each of the step blocks may include an identification number to distinguish the step block from other step blocks. This also makes it possible to specify multiple step blocks with the same step number as each other, in a distinguishable manner from each other in the program acquired by the information processing apparatus.

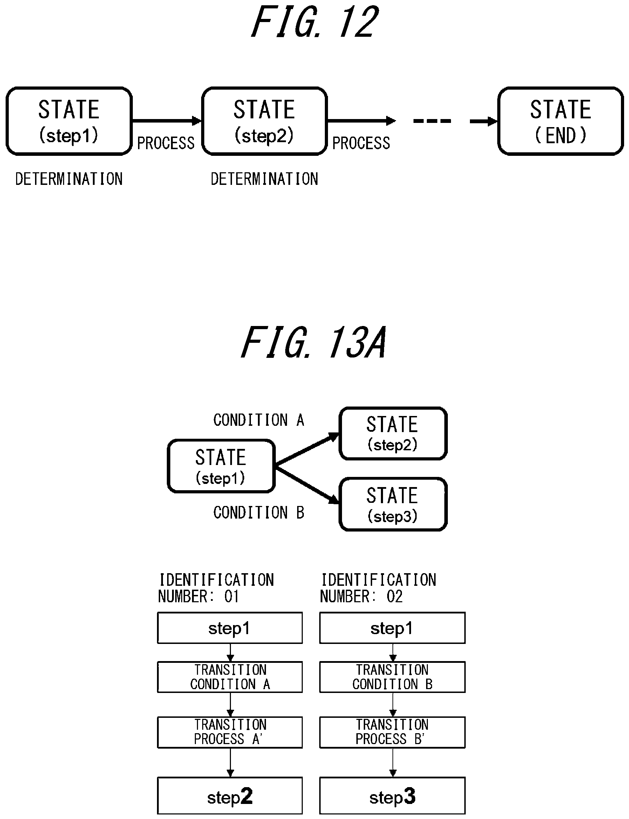

In the information processing apparatus according to one embodiment, the controller may be configured to acquire the program that includes a plurality of the step blocks whose processes are to be executed in parallel with each other. This enables parallel processing in the program. For example, in the program, functions similar to control syntaxes illustrated in FIGS. 13A to 13C can be realized.

In the information processing apparatus according to one embodiment, the identification number may include a priority level that indicates priority of a process to be executed when transition conditions required for state transitions are satisfied in the plurality of the step blocks, and the controller may be configured to execute a process of one step block, out of the plurality of the step blocks, based on the priority level. Therefore, in the program, the functions similar to the control syntaxes illustrated in FIGS. 13A to 13C can be realized.

In the information processing apparatus according to one embodiment, the controller may be configured to cause a terminal apparatus, which is communicably connected to the information processing apparatus, to display a first screen that indicates an execution status of the program. This allows the user to easily check a current status of the program, using an output interface of the terminal apparatus.

In the information processing apparatus according to one embodiment, the controller may be configured to cause the terminal apparatus to display a second screen for editing a variable, which is required in the execution of the program and is used in the step blocks. This allows the user to easily edit, using an input interface, the variable used in the program while viewing the output interface of the terminal apparatus.

In the information processing apparatus according to one embodiment, the controller may be configured to cause the terminal apparatus to display a third screen that indicates an instruction based on the execution of the program and a comment from the user on the instruction. This allows the user to easily confirm, using the output interface of the terminal apparatus, the instruction based on the execution of the program. The user can easily confirm, using the output interface of the terminal apparatus, the comment on the instruction, which has been entered using the input interface of the terminal apparatus.

In the information processing apparatus according to one embodiment, the controller may be configured to cause the terminal apparatus to display a fourth screen for constructing the program in accordance with operations of the user using the terminal apparatus. This allows the user to easily create, using the input interface, the program in the block programming language while viewing the output interface of the terminal apparatus.

In the information processing apparatus according to one embodiment, the fourth screen may include a selection area to select a certain functional block, from among the multiple functional blocks, and a construction area to construct the program by arranging the selected functional block for each of the step blocks.

This improves operability when the user constructs the program. The user can perform an operation of selecting the certain functional block, from among the multiple functional blocks, and an operation of constructing the program by arranging the selected functional block for each of the step blocks, in the different areas on the fourth screen. The user can construct the program more easily.

An information processing method according to some embodiments is an information processing method for supporting at least one of the creation or execution of a program in a block programming language, the information processing method including:
acquiring the program that includes one or more step blocks, each as one of functional blocks, each of the step blocks collectively associating a part of processes among a series of processes based on the program, the series of processes being executed in accordance with a state transition from one of the step blocks to another of the step blocks.

This makes the program in the block programming language understood more easily. By acquiring the program including the step blocks, each as one of the functional blocks, the information processing apparatus introduces the concept of "steps" into block programming, thus allowing the program to be visualized more simply. The program is not expressed in a series from the start to the end, but rather by subsets as steps. Therefore, even when the entire program becomes large, the program is less likely to be nested too deep.

A program according to some embodiments is configured to cause an information processing apparatus, which is configured to support at least one of the creation or execution of a program in a block programming language, to execute an operation including:
acquiring the program that includes one or more step blocks, each as one of functional blocks, each of the step blocks collectively associating a part of processes among a series of processes based on the program, the series of processes being executed in accordance with a state transition from one of the step blocks to another of the step blocks.

This makes the program in the block programming language understood more easily. By acquiring the program including the step blocks, each as one of the functional blocks, the information processing apparatus introduces the concept of "steps" into block programming, thus allowing the program to be visualized more simply. The program is not expressed in a series from the start to the end, but rather by subsets as steps. Therefore, even when the entire program becomes large, the program is less likely to be nested too deep.

The information processing apparatus, the information processing method, and the program according to an embodiment of the present disclosure can make the program in the block program language understood more easily.

### BRIEF DESCRIPTION OF THE DRAWINGS

In the accompanying drawings:
FIG. 1 is a configuration diagram of an information processing system including an information processing apparatus according to an embodiment of the present disclosure;
FIG. 2 is a block diagram illustrating a schematic configuration of each of the information processing apparatus and a terminal apparatus in FIG. 1;
FIG. 3 is a first diagram to explain an example of processing by the information processing apparatus in FIG. 2;
FIG. 4 is a schematic diagram illustrating the details of a step block in FIG. 3;
FIG. 5A is a first schematic diagram illustrating examples of a first functional block and second functional blocks in FIG. 4;
FIG. 5B is a second schematic diagram illustrating examples of a first functional block and second functional blocks in FIG. 4;
FIG. 5C is a third schematic diagram illustrating examples of a first functional block and second functional blocks in FIG. 4;
FIG. 6 is a second diagram to explain an example of processing by the information processing apparatus in FIG. 2;
FIG. 7 is a third diagram to explain an example of processing by the information processing apparatus in FIG. 2;
FIG. 8A is a fourth diagram to explain an example of processing by the information processing apparatus in FIG. 2;
FIG. 8B is a fifth diagram to explain an example of processing by the information processing apparatus in FIG. 2;
FIG. 9 is a sixth diagram to explain an example of processing by the information processing apparatus in FIG. 2;
FIG. 10 is a seventh diagram to explain an example of processing by the information processing apparatus in FIG. 2;
FIG. 11 is an eighth diagram to explain an example of processing by the information processing apparatus in FIG. 2;
FIG. 12 is a nineth diagram to explain an example of processing by the information processing apparatus in FIG. 2;
FIG. 13A is a tenth diagram to explain an example of processing by the information processing apparatus in FIG. 2;
FIG. 13B is an eleventh diagram to explain an example of processing by the information processing apparatus in FIG. 2;
FIG. 13C is a twelfth diagram to explain an example of processing by the information processing apparatus in FIG. 2; and
FIG. 14 is a schematic diagram to explain another example of processing by the information processing apparatus in FIG. 2.

### DETAILED DESCRIPTION

The background and problems of conventional technology will be described in more detail.

Block programming languages to enable users unfamiliar with programming to visually construct programs with intuitive operations are known. For example, Blockly provided by Google LLC, Scratch using the Blockly, and the like are widely known.

Using the block programming languages, the users can construct the programs by simply arranging and fitting multiple functional blocks, each of which represents a single process, on screens by operations such as drag-and-drop. However, the block programming languages are positioned as introduction to programming before learning programming in earnest.

The conventional block programming languages use control syntaxes, such as an if/else statement and a while statement. Such control syntaxes are useful in constructing logical programs. However, in the conventional block programming languages, which express a program in a series from the start to the end as a collection of multiple functional blocks, when the entire program becomes large and the control syntaxes are used frequently, the program branches on conditions and is nested too deep.

This makes the structure of the program complex, and it is not easy for a user to understand how the branching of the conditions is created in the long program. The difficulty is further increased when other users, rather than the user himself/herself who has constructed the program, try to understand such a large program. The lack of visibility of the large program prevents the other users from understanding the program even when the other users make changes to the program.

It is not easy for users, including the user who has constructed the program and the other users, to rewrite a part of the program even when the users want to make a partial change to the program, such as adding a control syntax, for example. When the users want to rewrite a part of the program, the users have to create a process to determine a current state of the program each time, which requires a lot of time and effort.

It would be helpful to provide an information processing apparatus, an information processing method, and a program that enable easier understanding of a program in a block programming language.

An embodiment of the present disclosure will be mainly described with reference to the accompanying drawings. The following description also applies to an information processing method and a program that are executed by an information processing apparatus 10 to which the present disclosure is applied.

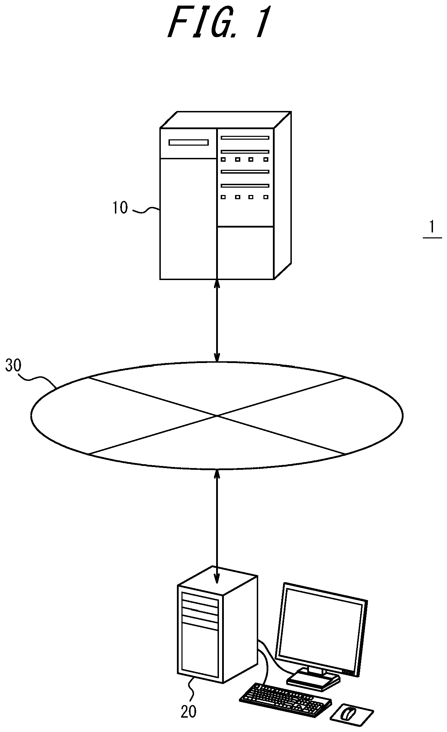

FIG. 1 is a configuration diagram of an information processing system 1 including the information processing apparatus 10 according to the embodiment of the present disclosure. With reference to FIG. 1, an overview of the information processing system 1 including the information processing apparatus 10 according to the embodiment of the present disclosure will be mainly described. The information processing system 1 has a terminal apparatus 20, in addition to the information processing apparatus 10.

Although only one information processing apparatus 10 and only one terminal apparatus 20 are illustrated in FIG. 1 for simplicity of explanation, the numbers of information processing apparatuses 10 and terminal apparatuses 20 in the information processing system 1 may be two or more for each. Each of the information processing apparatus 10 and the terminal apparatus 20 is connected to a network 30, which includes a mobile communication network or the Internet.

The information processing apparatus 10 is one server apparatus, or multiple server apparatuses that can communicate with each other. The information processing apparatus 10 is not limited to these, but may be any general purpose electronic device, such as a personal computer (PC) or smartphone, or any other electronic device dedicated to the information processing system 1.

The terminal apparatus 20 is a general purpose electronic device such as a PC, a tablet PC, a smartphone, or a wearable device such as a smartwatch. The terminal apparatus 20 is an electronic device used by a user who performs, with the information processing system 1, at least one of the creation or execution of a program in a block programming language. The terminal apparatus 20 is not limited to these, but may be one server apparatus or multiple server apparatuses that can communicate with each other, used by the user, or another electronic device dedicated to the information processing system 1.

The information processing apparatus 10 supports at least one of the creation or execution of the program in the block programming language while cooperating with the terminal apparatus 20. For example, the information processing apparatus 10 receives, from the terminal apparatus 20 via the network 30, the program constructed in accordance with operations from the user using the terminal apparatus 20, and stores the program in the information processing apparatus 10 itself. For example, the information processing apparatus 10 causes the terminal apparatus 20 to display, via the network 30, various screens related to the execution of the program constructed by the user, screens for the user to construct the program by the operations using the terminal apparatus 20, or the like.

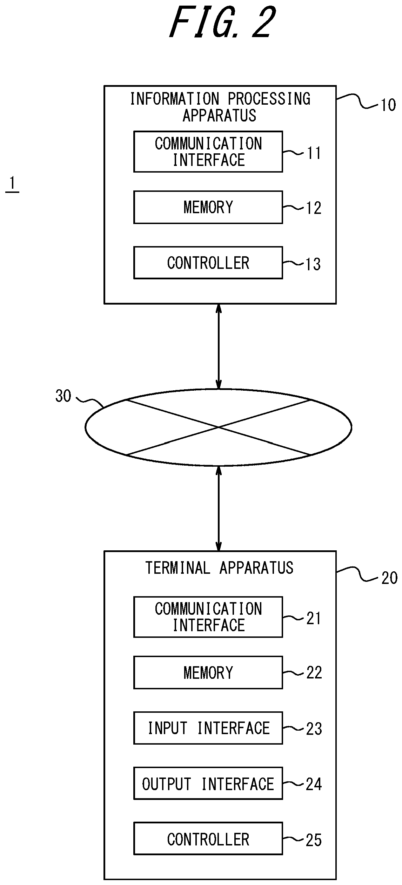

FIG. 2 is a block diagram illustrating a schematic configuration of each of the information processing apparatus 10 and the terminal apparatus 20 in FIG. 1. With reference to FIG. 2, an example of a configuration of each of the information processing apparatus 10 and the terminal apparatus 20 included in the information processing system 1 will be mainly described.

As illustrated in FIG. 2, the information processing apparatus 10 has a communication interface 11, a memory 12, and a controller 13.

The communication interface 11 includes one or more communication interfaces that connect to the network 30. The communication interfaces comply with, for example, mobile communication standards such as 4th generation (4G) or 5th generation (5G), wired local area network (LAN) standards, or wireless LAN standards. The communication interfaces are not limited to these, but may comply with any communication standards. For example, the communication interfaces may also comply with near-field communication standards. In this embodiment, the information processing apparatus 10 is communicably connected to the network 30 via the communication interface 11. The communication interface 11 transmits and receives a variety of information via the network 30.

The memory 12 includes a memory module, such as hard disk drive (HDD), solid state drive (SSD), electrically erasable programmable read-only memory (EEPROM), read-only memory (ROM), or random access memory (RAM). The memory 12 stores information necessary to realize operations of the information processing apparatus 10. The memory 12 stores information obtained by the operations of the information processing apparatus 10. For example, the memory 12 stores a system program, an application program, and various data acquired by any means, such as communication.

The memory 12 may function as a main memory module, an auxiliary memory module, or a cache memory. The memory 12 is not limited to one installed in the information processing apparatus 10, but may include an external memory module connected by a digital input/output port such as universal serial bus (USB).

The controller 13 includes one or more processors. In the present disclosure, "processor" is a general purpose processor or a dedicated processor specialized for particular processing, but is not limited these. The controller 13 includes, for example, a central processing unit (CPU). The controller 13 is communicably connected to each component of the information processing apparatus 10 and controls the operations of the entire information processing apparatus 10.

A configuration of the terminal apparatus 20 included in the information processing system 1 will be mainly described. As illustrated in FIG. 2, the terminal apparatus 20 has a communication interface 21, a memory 22, an input interface 23, an output interface 24, and a controller 25.

The communication interface 21 includes one or more communication interfaces that connect to the network 30. The communication interfaces comply with, for example, mobile communication standards such as 4G or 5G, wired LAN standards, or wireless LAN standards. The communication interfaces are not limited to these, but may comply with any communication standards. For example, the communication interfaces may also comply with near-field communication standards. In this embodiment, the terminal apparatus 20 is communicably connected to the network 30 via the communication interface 21. The communication interface 21 transmits and receives a variety of information via the network 30.

The memory 22 includes a memory module, such as HDD, SSD, EEPROM, ROM, or RAM. The memory 22 stores information necessary to realize operations of the terminal apparatus 20. The memory 22 stores information obtained by the operations of the terminal apparatus 20. For example, the memory 22 stores a system program, an application program, and various data acquired by any means, such as communication.

The memory 22 may function as a main memory module, an auxiliary memory module, or a cache memory. The memory 22 is not limited to one installed in the terminal apparatus 20, but may include an external memory module connected by a digital input/output port such as USB.

The input interface 23 includes one or more input interfaces that detect user input and acquire input information based on the user's operations. The input interfaces include physical keys, capacitive keys, a mouse, a touch screen integrated with a display of the output interface 24, an imaging module such as a camera, a microphone that accepts voice input, or the like.

The output interface 24 includes one or more output interfaces that output information and notify the user. The output interfaces include a display that outputs the information in the form of images, a speaker that outputs the information in the form of sound, a vibrator that outputs the information in the form of vibrations, or the like. The display includes a liquid crystal display (LCD), an organic electro luminescence (EL) display, or the like.

The controller 25 includes one or more processors. The controller 25 includes a CPU, for example. The controller 25 is communicably connected to each component of the terminal apparatus 20 and controls the operations of the entire terminal apparatus 20.

First, an example of processing in the information processing system 1 when the information processing apparatus 10, in cooperation with the terminal apparatus 20, supports the user in creating the program in the block programming language will be mainly described.

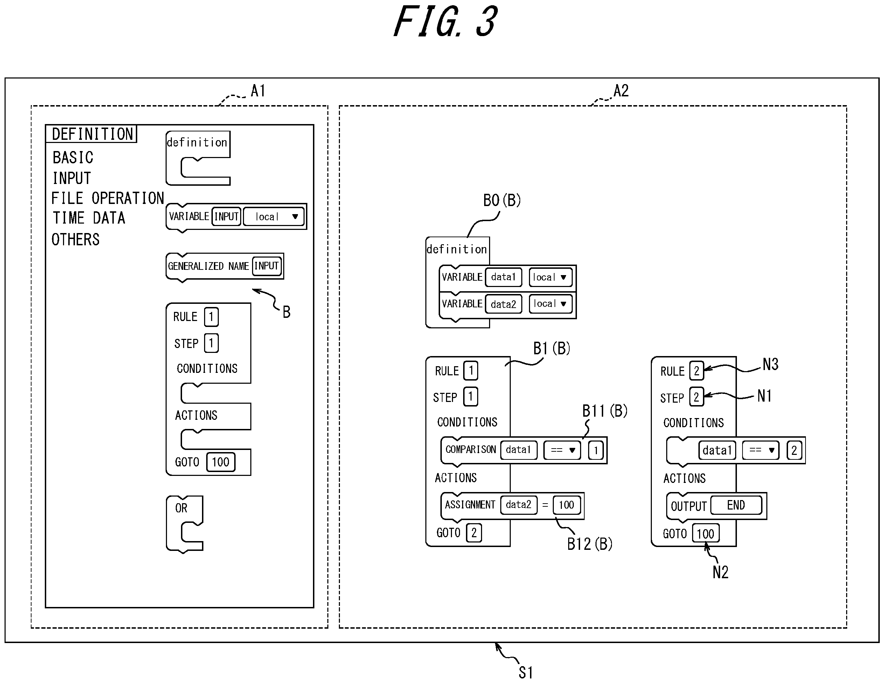

FIG. 3 is a first diagram to explain an example of processing by the information processing apparatus 10 in FIG. 2. With reference to FIG. 3, a screen S1 that the information processing apparatus 10 causes the output interface 24 of the terminal apparatus 20 to display, via the communication interface 11 and the network 30, will be mainly described.

The controller 13 of the information processing apparatus 10 causes the terminal apparatus 20, which is communicably connected to the information processing apparatus 10, to display the screen S1 for constructing the program in accordance with the operations of the user using the terminal apparatus 20. The controller 25 of the terminal apparatus 20 controls the output interface 24 to display the screen S1 for constructing the program in accordance with the operations of the user using the input interface 23. While viewing the screen S1 displayed on the output interface 24 of the terminal apparatus 20, the user creates the program in the block programming language by performing the operations using the input interface 23.

The screen S1 includes a selection area A1 to select a certain functional block B, from among multiple functional blocks B. The screen S1 includes a construction area A2 to construct the program by arranging the functional block B selected by the user from the selection area A1 for each step block B1, which will be described below. When creating the program in the block programming language, for example, the user selects a required functional block B, from among the multiple functional blocks B arranged in the selection area A1, and moves the selected functional block B to the construction area A2 based on an operation such as drag-and-drop. By repeating such an operation, the user constructs the program that executes a series of processes from the start to the end.

The controller 25 of the terminal apparatus 20 changes the type of the functional blocks B to be displayed in the selection area A1 any time in accordance with an operation of the user using the input interface 23. For example, by selecting an attribute name of the functional blocks B, at least one functional block B associated with the selected attribute name is displayed in the selection area A1. The user clicks the attribute name of a functional block B to be used in constructing the program, and updates the display of the selection area A1 so that the user can select the required functional block B. In the present disclosure, the "attribute name" includes definition, basic, input, file operation, time data, and others.

In accordance with the operations of the user using the input interface 23, the controller 25 of the terminal apparatus 20 arranges and displays, in the construction area A2, a functional block B0 that defines variables, and multiple step blocks B1. The function block B0 defines the variables "data 1" and "data 2". The multiple step blocks B 1 represent a sequence of the series of processes to be executed as the program. The processes of functional blocks B associated with the step blocks B1 are executed in order from a step number 1 over the multiple step blocks B1.

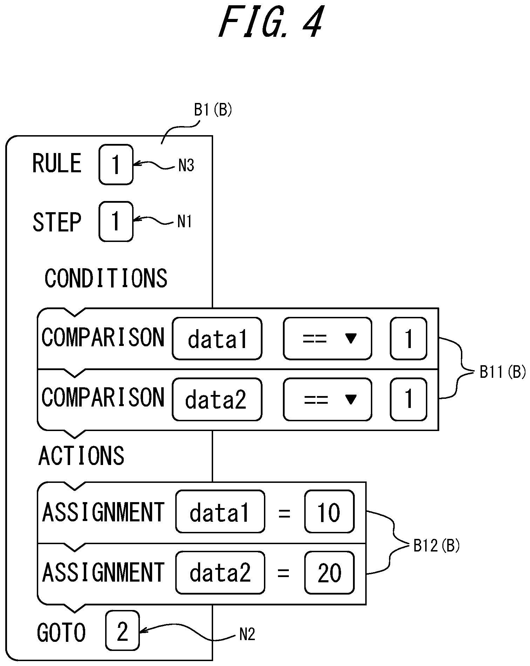

FIG. 4 is a schematic diagram illustrating the details of a step block B 1 in FIG. 3. With reference to FIG. 4, an example of the step block B1, which is included, as one of the functional blocks B, in the program to be acquired by the information processing apparatus 10 in FIG. 2, will be described in detail.

The step block B1 collectively associates a part of processes, among the series of processes based on the program. The series of processes is executed in accordance with a state transition from one step block B1 to another step block B1. In the present disclosure, "state" means, for example, a step of a process defined by the step block B1 in the program. The "state transition" means, for example, that the program transitions from a current state (step) to the next state (step) when the program is being executed.

The step block B1 is associated with a first functional block B11 that indicates a transition condition required for the state transition. The first functional block B11 associated with one step block B1 indicates the condition required for the state transition to another step block B1. When the program is being executed, upon satisfying the transition condition, the process transitions from contents based on the one step block B1 to contents based on the other step block B1.

The step block B1 illustrated in FIG. 4 is associated with multiple first functional blocks B11. For example, the step block B1 is associated with the multiple first functional blocks B11 that are determined in accordance with a logical operation of AND. When all of multiple transition conditions indicated by the multiple first functional blocks B11 are satisfied, the process transitions to contents based on another step block B1. For example, when the value of the variable "data 1" is 1 and the value of the variable "data 2" is also 1, the process transitions to the contents based on the other step block B1.

The step block B1 is associated with a second functional block B12 that indicates a transition process to be executed before the state transition as described above. The second functional block B12 associated with one step block B1 indicates the process to be executed before the state transition to another step block B1. For example, in a current state defined by the one step block B1, when the transition condition indicated by the first functional block B11 is satisfied, the transition process indicated by the second functional block B12 is executed. The transition process is, for example, a process that is executed after the transition condition associated with the same step block B1 is satisfied, but before the state transition. Thus, the first functional block B11 and the second functional block B12 are different from each other. The process then transitions from the contents based on the one step block B1 to the contents based on the other step block B1.

The step block B1 illustrated in FIG. 4 is associated with multiple second functional blocks B12. For example, in the step block B1, when all of the multiple transition conditions indicated by the multiple first functional blocks B11 are satisfied, all of multiple transition processes indicated by the multiple second functional blocks B12 are executed. For example, when the value of the variable "data 1" is 1 and the value of the variable "data 2" is also 1, a process of assigning a value of 10 to the variable "data 1" and a process of assigning a value of 20 to the variable "data 2" are executed. The process then transitions to the contents based on the other step block B1.

The step block B1 includes a step number N1, which indicates order in the series of processes based on the program. The step block B1 includes a step number N2 of the next step block B1 that executes a process subsequently to the state transition. For example, with the step block B1 having a step number N1 of 1, the next step block B1 having a step number N2 of 2 is associated. In the step block B1 illustrated in FIG. 4, a current state before the state transition is indicated by the step number 1, and the next state after the state transition is indicated by the step number 2.

The step block B1 uniquely includes an identification number N3 to distinguish the step block B1 from other step blocks B1. The multiple step blocks B 1 are all indicated by different identification numbers N3. In the step block B1 illustrated in FIG. 4, 1 is indicated as the identification number N3. The identification number N3 is different from each other in all of the multiple step blocks B1 while the step number N1 or the step number N2 may be the same as each other in some of the multiple step blocks B1.

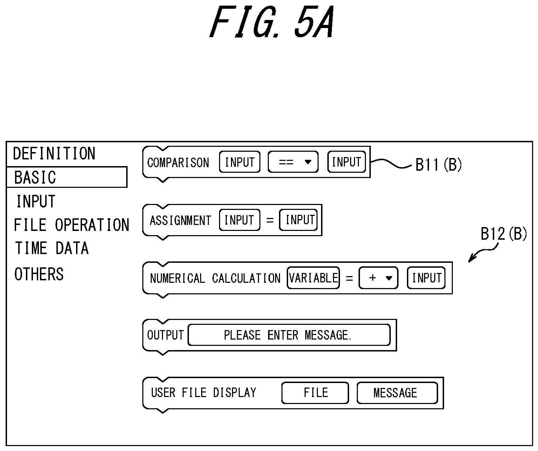

With reference to FIGS. 5A to 5C, examples of the first functional blocks B11 and the second functional blocks B12 illustrated in FIG. 4 will be mainly described below.

FIG. 5A is a first schematic diagram illustrating examples of the first functional block B11 and the second functional blocks B12 in FIG. 4. FIG. 5A illustrates examples of functional blocks B associated with "basic", among the attribute names in FIG. 3. The functional blocks B associated with "basic" among the attribute names include a first functional block B11 for comparison, and second functional blocks B12 for assignment, numerical calculation, output, and user file display.

The first functional block B11 for comparison is used for a process of determining whether to satisfy a transition condition that a variable entered on the left-hand side coincides with a numerical value entered on the right-hand side by a comparison between the variable and the numerical value. The second functional block B12 for assignment is used for a process of assigning a numerical value entered on the right-hand side to a variable entered on the left-hand side. The second functional block B12 for numerical operation is used for a numerical operation process that applies an arithmetic expression entered on the right-hand side to a variable entered on the left-hand side. The second functional block B12 for output is used for a process of outputting an entered message to the user through the output interface 24 or the like of the terminal apparatus 20. The second functional block B12 for user file display is used for a process of outputting a file, together with the entered message, to the user through the output interface 24 or the like of the terminal apparatus 20.

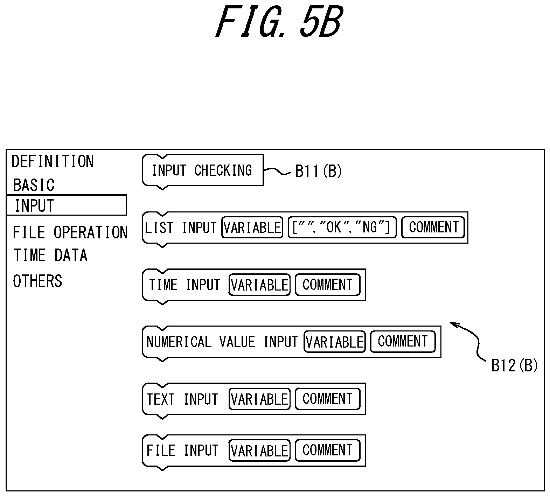

FIG. 5B is a second schematic diagram illustrating examples of the first functional block B11 and the second functional blocks B12 in FIG. 4. FIG. 5B illustrates examples of functional blocks B associated with "input", among the attribute names in FIG. 3. The functional blocks B associated with "input" among the attribute names include a first functional block B11 for input checking, and second functional blocks B12 for list input, time input, numerical value input, text input, and file input.

The first functional block B11 for input checking is used for a process of determining whether to satisfy a transition condition that input is correctly performed. The second functional block B12 for list input is used for a process of list input to input a variable, as a list, together with a comment using a pull-down menu or the like. The second functional block B12 for time input is used for a process of time input to input a variable, as a time, together with a comment. The second function block B12 for numerical value input is used for a process of numerical value input to input a variable, as a numerical value, together with a comment. The second functional block B12 for text input is used for a process of text input to input a variable, as text, together with a comment. The second functional block B12 for file input is used for a process of file input to hold the contents of a file specified by the user, as a variable, together with a comment.

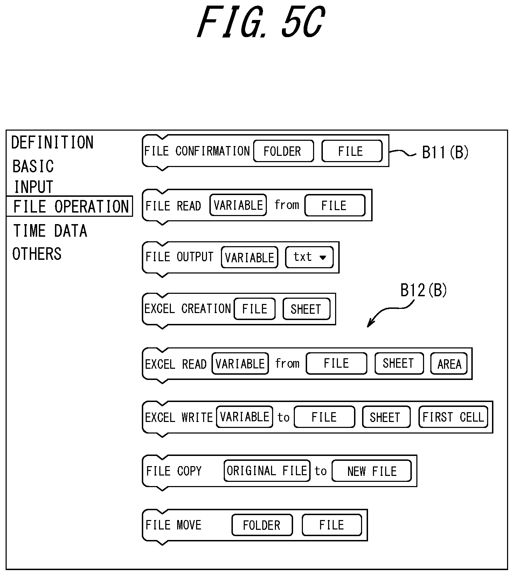

FIG. 5C is a third schematic diagram illustrating examples of the first functional block B11 and the second functional blocks B12 in FIG. 4. FIG. 5C illustrates examples of functional blocks B associated with "file operation", among the attribute names in FIG. 3. The functional blocks B associated with "file operation" among the attribute names include a first functional block B11 for file confirmation, and second functional blocks B12 for file read, file output, Excel creation, Excel read, Excel write, file copy, and file move.

The first functional block B11 for file confirmation is used for a process of determining whether to satisfy a transition condition that a file entered in an entered folder can be confirmed. The second functional block B12 for file read is used for a process of reading a variable entered from an entered file. The second functional block B12 for file output is used for a process of outputting a file with an entered variable, as a file name, based on an entered extension.

The second function block B12 for Excel creation is used for a process of newly creating a sheet with an entered file name. The second function block B12 for Excel read is used for a process of reading a variable entered from a sheet area of an entered file. The second function block B12 for Excel write is used for a process of writing an entered variable from a first cell of a sheet of an entered file.

The second functional block B12 for file copy is used for a process of newly copying an entered original file as an entered new file. The second functional block B12 for file move is used for a process of moving an entered file to an entered folder.

Referring again to FIG. 3, a process associated with the step block B1 in which the identification number N3 and the step number N1 are both 1 is first executed. At this time, in accordance with the first functional block B11 for comparison indicating a transition condition, it is determined whether the transition condition that the value of a variable "data 1" is 1 is satisfied. When the value of the variable "data 1" is 1, a value of 100 is assigned to a variable "data 2" in accordance with the second functional block B12 for assignment, and the program transitions the state from the step number 1 to a step number 2.

A process associated with the step block B1 in which the identification number N3 and the step number N1 are both 2 is subsequently executed. At this time, in accordance with the first functional block B11 for comparison indicating a transition condition, it is determined whether the transition condition that the value of a variable "data 1" is 2 is satisfied. When the value of the variable "data 1" is 2, a message "End" is output in accordance with the second functional block B12 for output, and the program transitions the state from the step number 2 to a step number 100, which means end.

The controller 13 of the information processing apparatus 10 receives the program in which the multiple step blocks B1, each of which is one of the functional blocks B, are arranged as described above, from the terminal apparatus 20 via the network 30 and the communication interface 11. The controller 13 stores, in the memory 12, the program acquired from the terminal apparatus 20.

Next, an example of processing in the information processing system 1 when the information processing apparatus 10 supports the execution of the program in the block programming language while cooperating with the terminal apparatus 20 will be mainly described.

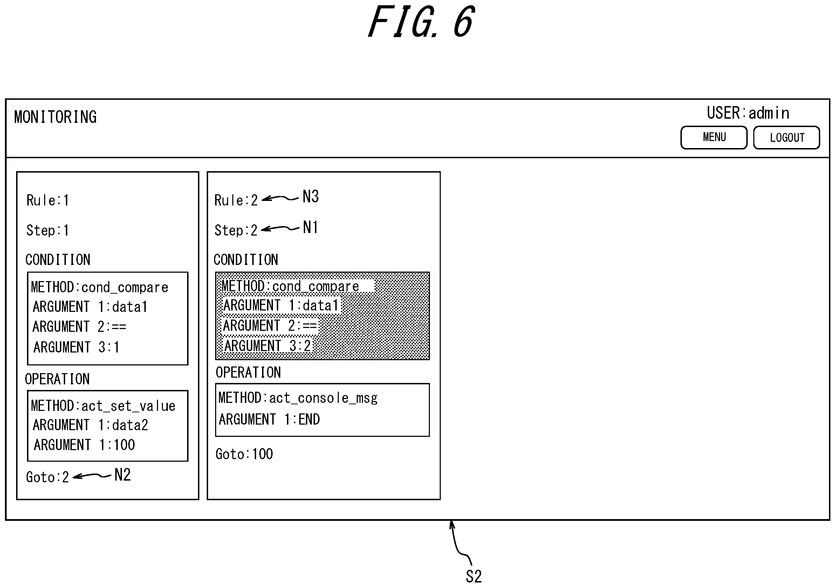

FIG. 6 is a second diagram to explain an example of processing by the information processing apparatus 10 in FIG. 2. With reference to FIG. 6, a screen S2 that the information processing apparatus 10 causes the output interface 24 of the terminal apparatus 20 to display, via the communication interface 11 and the network 30, will be mainly described.

The controller 13 of the information processing apparatus 10 causes the terminal apparatus 20, which is communicably connected to the information processing apparatus 10, to display the screen S2 indicating an execution status of the program. The screen S2 illustrated in FIG. 6 indicates the execution status of the program constructed as illustrated in FIG. 3. The controller 25 of the terminal apparatus 20 controls the output interface 24 to display the screen S2 that indicates the execution status of the program executed by the controller 13 of the information processing apparatus 10. While viewing the screen S2 displayed on the output interface 24 of the terminal apparatus 20, the user checks the execution status of the program.

In order to indicate, to the user, a current status of the program on the screen S2, the controller 13 of the information processing apparatus 10 highlights a functional block corresponding to a currently executed process. For example, in the step block B1 in which the identification number N3 and the step number N1 are both 2, when it is determined whether the transition condition is satisfied, the controller 13 highlights a box corresponding to the first functional block B11 indicating the transition condition.

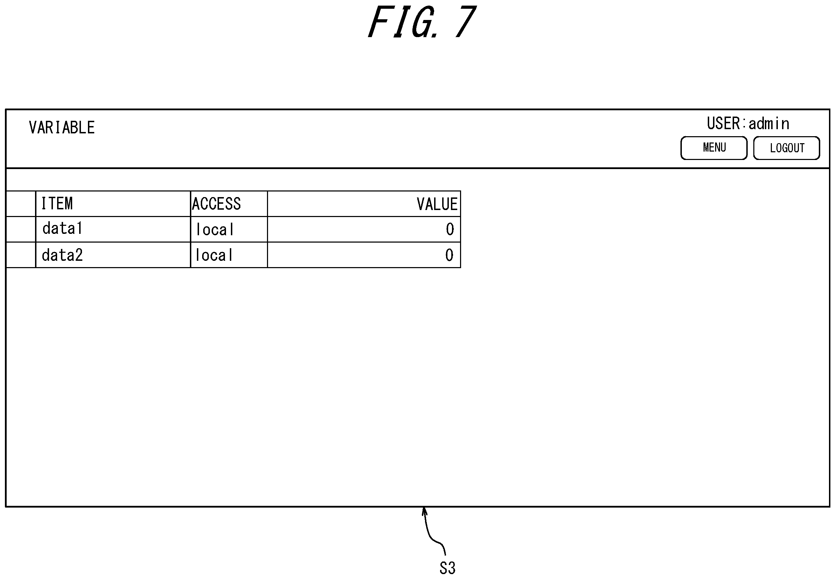

FIG. 7 is a third diagram to explain an example of processing by the information processing apparatus 10 in FIG. 2. With reference to FIG. 7, a screen S3 that the information processing apparatus 10 causes the output interface 24 of the terminal apparatus 20 to display, via the communication interface 11 and the network 30, will be mainly described.

The controller 13 of the information processing apparatus 10 causes the terminal apparatus 20 to display the screen S3 for editing variables, which are required in the execution of the program and are used in the step blocks B1. The screen S3 illustrated in FIG. 7 is for editing the variables required in the execution of the program constructed as illustrated in FIG. 3. The controller 25 of the terminal apparatus 20 controls the output interface 24 to display the screen S3 for editing the variables, which are required in the execution of the program by the controller 13 of the information processing apparatus 10. By operating the input interface 23 while viewing the screen S3 displayed on the output interface 24 of the terminal apparatus 20, the user edits the variables required in the execution of the program. For example, the user edits the values of the variables "data 1" and "data 2" based on input operations using the input interface 23 of the terminal apparatus 20.

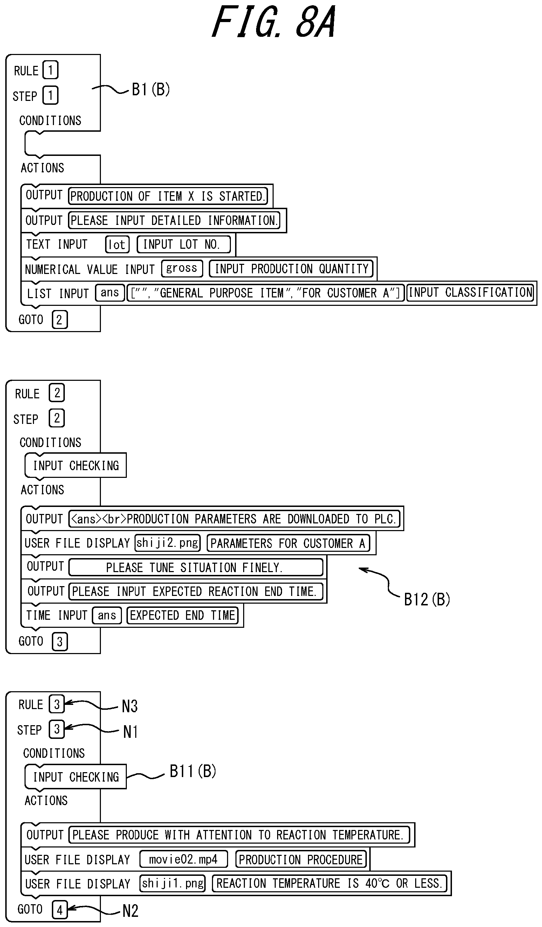

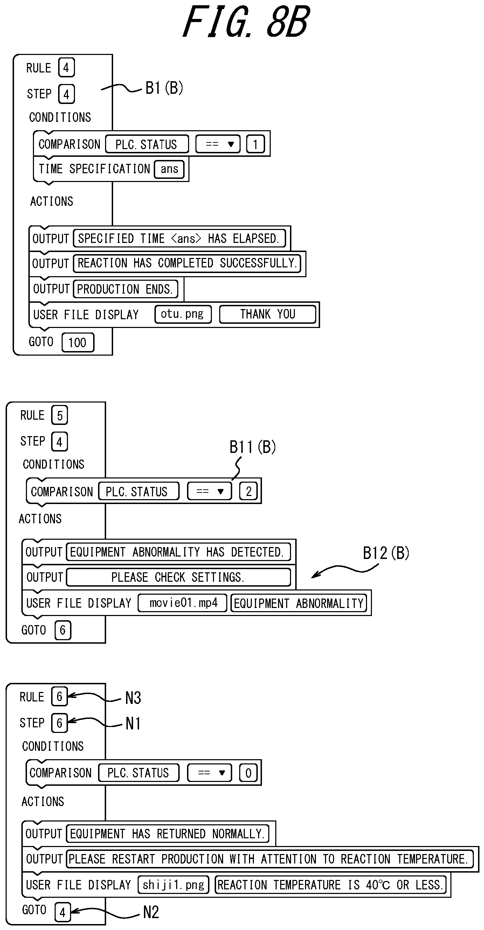

FIG. 8A is a fourth diagram to explain an example of processing by the information processing apparatus 10 in FIG. 2. FIG. 8B is a fifth diagram to explain an example of processing by the information processing apparatus 10 in FIG. 2. FIGS. 8A and 8B illustrate another example of the program constructed by the user using the input interface 23 of the terminal apparatus 20 on the screen S1 illustrated in FIG. 3. As illustrated in FIGS. 8A and 8B, six step blocks B 1 are arranged in the program.

A step block B1 in which the identification number N3 and the step number N1 are both 1 is not associated with any first functional block B 11 indicating a transition condition, but is associated with multiple second functional blocks B12 indicating transition processes. The multiple second functional blocks B12 include, in this order, two consecutive second functional blocks B12 for output, a second functional block B12 for text input, a second functional block B12 for numerical value input, and a second functional block B12 for list input. Upon executing these transition processes, the program transitions to a state of a step number 2.

A step block B1 in which the identification number N3 and the step number N1 are both 2 is associated with a first functional block B11 for input checking indicating a transition condition and multiple second functional blocks B12 indicating transition processes. The multiple second functional blocks B12 include, in this order, a second functional block B12 for output, a second functional block B12 for user file display, two consecutive second functional blocks B12 for output, and a second functional block B12 for time input. Upon executing these transition processes, the program transitions to a state of a step number 3.

A step block B1 in which the identification number N3 and the step number N1 are both 3 is associated with a first functional block B11 for input checking indicating a transition condition and multiple second functional blocks B12 indicating transition processes. The multiple second functional blocks B12 include, in this order, a second functional block B12 for output and two consecutive second functional blocks B12 for user file display. Upon executing these transition processes, the program transitions to a state of a step number 4.

In this program, the state of the step number 4 is paralleled by two different identification numbers N3.

A step block B1 in which the identification number N3 and the step number N1 are both 4 is associated with multiple first functional blocks B11 indicating transition conditions and multiple second functional blocks B12 indicating transition processes. The multiple first functional blocks B11 include, in this order, a first functional block B11 for comparison and a first functional block B11 for time specification. The multiple second functional blocks B12 include, in this order, three consecutive second functional blocks B12 for output and a second functional block B12 for user file display. Upon executing these transition processes, the program transitions to a state of a step number 100 and ends.

A step block B1 in which the identification number N3 is 5 and the step number N1 is 4 is associated with a first functional block B11 for comparison indicating a transition condition and multiple second functional blocks B12 indicating transition processes. The multiple second functional blocks B12 include, in this order, two consecutive second functional block B12 for output and a second functional block B12 for user file display. Upon executing these transition processes, the program transitions to a state of a step number 6.

A step block B1 in which the identification number N3 and the step number N1 are both 6 is associated with a first functional block B11 for comparison indicating a transition condition and multiple second functional blocks B12 indicating transition processes. The multiple second functional blocks B12 include, in this order, two consecutive second functional blocks B12 for output and a second functional block B12 for the user file display. Upon executing these transition processes, the program transitions to a state of the step number 4.

In the step number 4 of the program, the step blocks B1 with the different identification numbers N3 are arranged in parallel with each other. The controller 13 of the information processing apparatus 10 acquires the program, which includes the multiple step blocks B1 whose processes are to be executed in parallel with each other, from the terminal apparatus 20 via the network 30 and the communication interface 11.

When the transition condition required for the state transition is satisfied in any of the multiple step blocks B1, the controller 13 executes only the process of the step block B1 in which the transition condition is satisfied. For example, as illustrated in FIG. 8B, when the transition condition required for the state transition is satisfied in only one of the two step blocks B1 with the step number N1 of 4, the controller 13 executes the process of only one of the step blocks B1.

Conversely, when the transition conditions required for the state transitions are satisfied in the multiple step blocks B1, the controller 13 gives priority to the process of the step block B1 with the lowest identification number N3. Supposing that the transition conditions required for the state transitions are satisfied in both of the two step blocks B1 with the step number N1 of 4 in FIG. 8B, the controller 13 gives priority to the process of the step block B1 with the identification number N3 of 4.

The identification number N3 includes a priority level indicating priority of the process to be executed when the transition conditions required for the state transitions are satisfied in the multiple step blocks B1. When the identification number N3 is represented by a numeral as described above, the priority level corresponds to the numeral itself. For example, the lower the numeral is, the higher the priority level may be. The controller 13 executes the process of one step block B1, among the multiple step blocks B1, based on the priority level. For example, when the transition conditions required for the state transitions are satisfied in the multiple step blocks B1, the controller 13 gives priority to the process of the step block B1 with the highest priority, i.e., with the lowest numeral of the identification number N3.

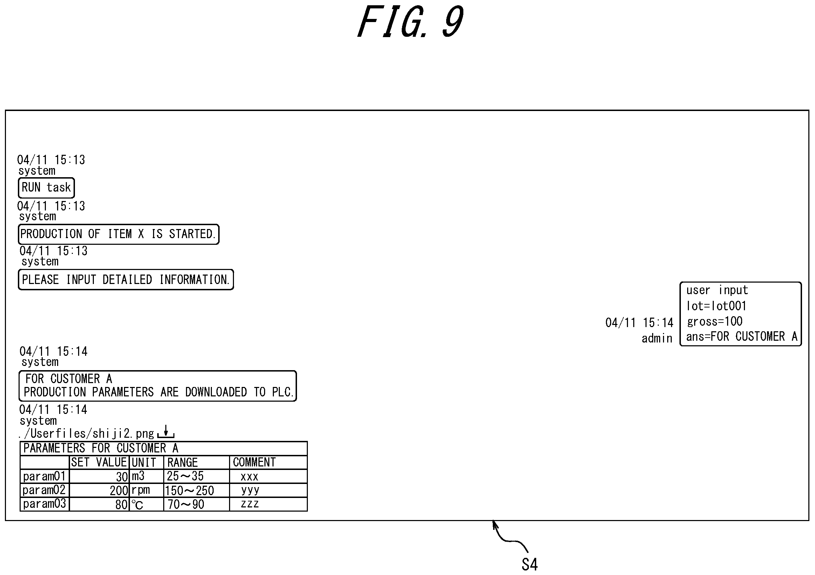

FIG. 9 is a sixth diagram to explain an example of processing by the information processing apparatus 10 in FIG. 2. With reference to FIG. 9, a screen S4 that the information processing apparatus 10 causes the output interface 24 of the terminal apparatus 20 to display, via the communication interface 11 and the network 30, will be mainly described.

The controller 13 of the information processing apparatus 10 causes the terminal apparatus 20 to display the screen S4 that indicates an instruction based on the execution of the program, and a comment from the user on the instruction. In addition to the instruction based on the execution of the program and the comment from the user on the instruction, an image that is output as a result of the execution of the program is also displayed in the screen S4.

The screen S4 illustrated in FIG. 9 partially indicates an instruction based on the execution of the program constructed as illustrated in FIG. 8A, comments from the user on the instruction, and an image output as a result of the execution of the program. The controller 25 of the terminal apparatus 20 controls the output interface 24 to display the screen S4 based on the execution of the program by the controller 13 of the information processing apparatus 10.

The user enters the comments on the instruction by operating the input interface 23 while confirming the instruction from the program on the screen S4 displayed on the output interface 24 of the terminal apparatus 20. For example, the user enters a lot number, a production quantity, and a customer name, as the comments on the instruction "Please input detailed information".

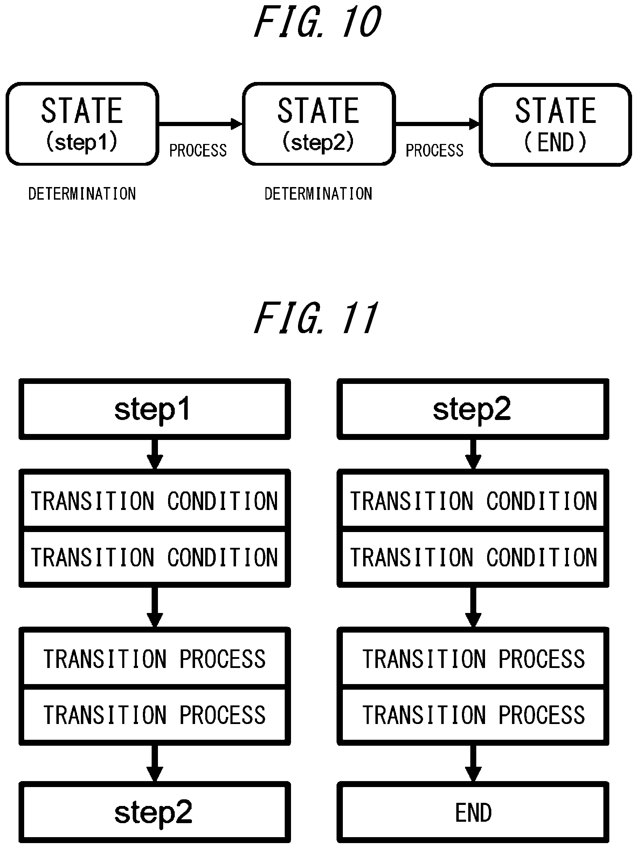

FIG. 10 is a seventh diagram to explain an example of processing by the information processing apparatus 10 in FIG. 2. FIG. 11 is an eighth diagram to explain an example of processing by the information processing apparatus 10 in FIG. 2. FIG. 12 is a nineth diagram to explain an example of processing by the information processing apparatus 10 in FIG. 2. With reference to FIGS. 10 to 12, the program that the information processing apparatus 10 acquires from the terminal apparatus 20 via the network 30 and the communication interface 11 will be mainly described.

As described above, the program, which is created by the user using the input interface 23 of the terminal apparatus 20 and executed by the controller 13 of the information processing apparatus 10, is constructed as a flow of steps defined as states. The program is divided into multiple states from the start to the end. In the example illustrated in FIG. 10, the program is divided into a state of Step 1 and a state of Step 2 from the start to the end. In the example illustrated in FIG. 12, the program is divided into three or more states from the start to the end.

As illustrated in FIG. 11, the user creates step rules from the start to the end of the program in the step blocks B1, using the input interface 23 of the terminal apparatus 20. Each step rule includes a transition condition on which the program transitions the state, a transition process to be executed when the transition condition is satisfied, the number of a step to be transitioned to, and the like.

For example, a step rule at Step 1 includes two transition conditions. The step rule at Step 1 includes two transition processes to be executed when the two transition conditions are both satisfied. The step rule at Step 1 includes a step number 2, as a transition destination. For example, a step rule at Step 2 includes two transition conditions. The step rule at Step 2 includes two transition processes to be executed when the two transition conditions are both satisfied. The step rule at Step 2 includes an end of the process as a transition destination.

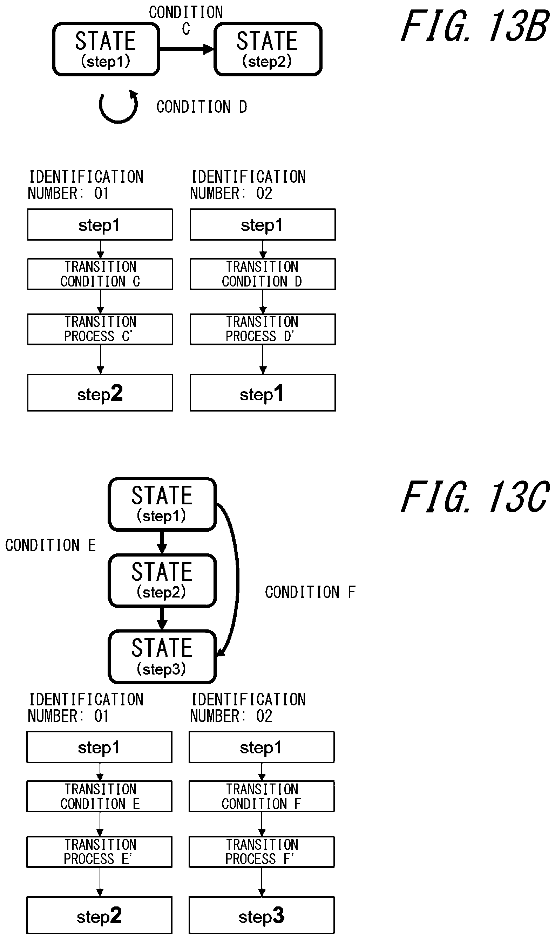

FIG. 13A is a tenth diagram to explain an example of processing by the information processing apparatus 10 in FIG. 2. FIG. 13B is an eleventh diagram to explain an example of processing by the information processing apparatus 10 in FIG. 2. FIG. 13C is a twelfth diagram to explain an example of processing by the information processing apparatus 10 in FIG. 2. With reference to FIGS. 13A to 13C, a method of creating the step rules to obtain the same functions as control syntaxes, such as if/else statements, in the program that the information processing apparatus 10 acquires from the terminal apparatus 20, via the network 30 and the communication interface 11, will be mainly described.

FIG. 13A illustrates step rules to obtain the same function as an if/else statement to obtain a branch. When a transition condition A is satisfied in the state of Step 1, the program transitions to the state of Step 2. When a transition condition B is satisfied in the state of Step 1, the program transitions to the state of Step 3. At this time, the program includes two step blocks B1.

With a step block B1 with an identification number N3 of 01, the transition condition A is associated. With the step block B1, a transition process A' to be executed when the transition condition A is satisfied is associated. With the step block B1, a step number 2 is associated as a transition destination.

With a step block B1 with an identification number N3 of 02, the transition condition B is associated. With the step block B1, a transition process B' to be executed when the transition condition B is satisfied is associated. With the step block B1, a step number 3 is associated as a transition destination.

When executing the program, the controller 13 of the information processing apparatus 10 executes, in parallel, the processes of both Step 1 with the identification number N3 of 01 and Step 1 with the identification number N3 of 02. The program changes the state of transition in response to satisfying at least one of the transition condition A or the transition condition B. The program transitions from the state of Step 1 to the state of Step 2 in response to satisfying the transition condition A only. The program transitions from the state of Step 1 to the state of Step 3 in response to satisfying the transition condition B only. When both of the transition conditions A and B are satisfied, the program transitions from the state of Step 1 to the state of Step 2 because the process of the step block B1 with the lowest identification number N3 has priority.

FIG. 13B illustrates step rules to obtain the same function as a for statement to obtain a repetition. When a transition condition C is satisfied in the state of Step 1, the program transitions to the state of Step 2. When a transition condition D is satisfied in the state of Step 1, the program transitions to the state of Step 1 itself. At this time, the program includes two step blocks B1.

With a step block B1 with an identification number N3 of 01, the transition condition C is associated. With the step block B1, a transition process C' to be executed when the transition condition C is satisfied is associated. With the step block B1, a step number 2 is associated as a transition destination.

With a step block B1 with an identification number N3 of 02, the transition condition D is associated. With the step block B1, a transition process D' to be executed when the transition condition D is satisfied is associated. With the step block B1, a step number 1 is associated as a transition destination.

When executing the program, the controller 13 of the information processing apparatus 10 executes, in parallel, the processes of both Step 1 with the identification number N3 of 01 and Step 1 with the identification number N3 of 02. The program changes the state of transition in response to satisfying at least one of the transition condition C or the transition condition D. The program transitions from the state of Step 1 to the state of Step 2 in response to satisfying the transition condition C only. The program transitions from the state of Step 1 to the state of Step 1 in response to satisfying the transition condition D only. When both of the transition conditions C and D are satisfied, the program transitions from the state of Step 1 to the state of Step 2 because the process of the step block B1 with the lowest identification number N3 has priority.

FIG. 13C illustrates step rules to obtain the same function as a goto statement to obtain a jump. When a transition condition E is satisfied in the state of Step 1, the program transitions to the state of Step 2. When a transition condition F is satisfied in the state of Step 1, the program jumps over the state of Step 2, and transitions to the state of Step 3. At this time, the program includes two step blocks B1.

With a step block B1 with an identification number N3 of 01, the transition condition E is associated. With the step block B1, a transition process E' to be executed when the transition condition E is satisfied is associated. With the step block B1, a step number 2 is associated as a transition destination.

With a step block B1 with an identification number N3 of 02, the transition condition F is associated. With the step block B1, a transition process F' to be executed when the transition condition F is satisfied is associated. With the step block B 1, a step number 3 is associated as a transition destination.

When executing the program, the controller 13 of the information processing apparatus 10 executes, in parallel, the processes of both Step 1 with the identification number N3 of 01 and Step 1 with the identification number N3 of 02. The program changes the state of transition in response to satisfying at least one of the transition condition E or the transition condition F. The program transitions from the state of Step 1 to the state of Step 2 in response to satisfying the transition condition E only. The program transitions from the state of Step 1 to the state of Step 3 in response to satisfying the transition condition F only. When both of the transition conditions E and F are satisfied, the program transitions from the state of Step 1 to the state of Step 2 because the process of the step block B1 with the lowest identification number N3 has priority.

According to the embodiment described above, the program in the block programming language can be understood more easily. The information processing apparatus 10 introduces the concept of "steps" into block programming by acquiring the program that includes the step blocks B1, each as one of the functional blocks B, thus allowing the program to be visualized more simply. The program is not expressed in a series from the start to the end, but rather by subsets as steps. Therefore, even when the entire program becomes large, the program is less likely to be nested too deep.

The structure of the program is thereby simplified, and it becomes easy for the user to understand how the branching of the conditions is created in the long program. As well as the user himself/herself who has constructed the program, other users can understand such a large program easily. The better visibility of the large program makes it easier for the other users to understand the program even when the other users make changes to the program.

When users, including the user who has constructed the program and the other users, make a partial change to the program, such as adding a control syntax, for example, the users only have to rewrite the step blocks B1 mainly, as a part of the program. The program eases a partial edit by the users and reduces time and effort for the edit.

The step block B1 is associated with the first functional block B11, which indicates the transition condition required for the state transition of the program. Therefore, in the program acquired by the information processing apparatus 10, it is possible to specify the condition to make the state transition of the program from one step block B1 to another step block B1.

The step block B1 is associated with the multiple first functional blocks B11 that are determined in accordance with the logical operation of AND. Therefore, in the program acquired by the information processing apparatus 10, it is possible to specify the AND condition to make the state transition of the program from one step block B1 to another step block B1.

The step block B1 is associated with the second functional block B12, which indicates the transition process to be executed before the state transition of the program. Therefore, in the program acquired by the information processing apparatus 10, it is possible to specify the process immediately before the state transition of the program from one step block B1 to another step block B 1.

The step block B1 includes the step number N1, which indicates the order in the series of processes based on the program. This allows the user to easily understand what step number the certain step block B1 corresponds to in the series of processes.

The step block B1 includes the step number N2 of the next step block B1 that executes the process subsequently to the state transition of the program. Therefore, in the program acquired by the information processing apparatus 10, it is possible to specify the transition destination in the state transition of the program from one step block B1 to another step block B1. When the transition condition is satisfied at each step, the controller 13 of the information processing apparatus 10 can execute the specified transition process and move the process to the next step.

The step block B1 includes the identification number N3 to distinguish the step block B1 from other step blocks B1. This also makes it possible to specify the multiple step blocks B1 with the same step number N1 as each other, in a distinguishable manner from each other, in the program acquired by the information processing apparatus 10.

The information processing apparatus 10 acquires the program that includes the multiple step blocks B1 whose processes are to be executed in parallel with each other. This enables parallel processing in the program. For example, in the program, the same functions as the control syntaxes illustrated in FIGS. 13A to 13C can be realized.

When the transition conditions required for the state transitions of the program are satisfied in the multiple step blocks B1, the information processing apparatus 10 executes the process of one step block B1, among the multiple step blocks B 1, based on the priority level. Therefore, in the program, the same functions as the control syntaxes illustrated in FIGS. 13A to 13C can be realized.

The program acquired by the information processing apparatus 10 can be constructed without using control syntaxes such as if/else statements. Therefore, as described above, even when the entire program becomes large, the program is less likely to be nested too deep. Even when the entire program is large, the structure of the program can be maintained simple.

The information processing apparatus 10 causes the terminal apparatus 20, which is communicably connected to the information processing apparatus 10, to display the first screen S2 indicating the execution status of the program. This allows the user to easily check the current status of the program, using the output interface 24 of the terminal apparatus 20.

The information processing apparatus 10 causes the terminal apparatus 20 to display the second screen S3 for editing the variable, which is required in the execution of the program and is used in the step blocks B 1. This allows the user to easily edit, using the input interface 23, the variable used in the program while viewing the output interface 24 of the terminal apparatus 20.

The information processing apparatus 10 causes the terminal apparatus 20 to display the third screen S4 indicating the instruction based on the execution of the program and the comment from the user on the instruction. This allows the user to easily confirm, using the output interface 24 of the terminal apparatus 20, the instruction based on the execution of the program. The user can easily confirm, using the output interface 24 of the terminal apparatus 20, the comment on the instruction, which has been entered using the input interface 23 of the terminal apparatus 20.

The information processing apparatus 10 causes the terminal apparatus 20 to display the fourth screen S1 for constructing the program in accordance with the operations of the user using the terminal apparatus 20. This allows the user to easily create, using the input interface 23, the program in the block programming language while viewing the output interface 24 of the terminal apparatus 20.

The fourth screen S1 includes the selection area A1 and the construction area A2. This improves operability when the user constructs the program. The user can perform the operation of selecting the certain functional block B, from among the multiple functional blocks B, and the operation of constructing the program by arranging the selected functional block B for each step block B1, in the different areas on the fourth screen S1. The user can construct the program more easily.

The information processing apparatus 10 can support the construction of work display logic for workers in the manufacturing industry. The information processing apparatus 10 improves the visibility of the program in the block programming language, and assists users with limited programming experience to easily construct the necessary logic.

Although the present disclosure has been described based on the drawings and examples, it should be noted that one skilled in the art can make various variations and modifications based on the present disclosure. Therefore, it should be noted that these variations and modifications are included in the scope of the present disclosure. For example, the functions or the like included in each configuration, step, or the like can be rearranged so as not to be logically inconsistent, and multiple configurations, steps, or the like can be combined into one or divided.

For example, it is possible to configure a general purpose electronic device, such as a smartphone or computer, to function as the information processing apparatus 10 according to the embodiment described above. Specifically, a program describing processing contents to realize each function of the information processing apparatus 10 or the like according to the embodiment is stored in a memory of the electronic device, and the program is read and executed by a processor of the electronic device. Thus, the present disclosure can also be realized as a program that can be executed by a processor.

Alternatively, the present disclosure can also be realized as a non-transitory computer readable medium storing a program that can be executed by one or more processors to cause the information processing apparatus 10 or the like according to the embodiment to perform each function. It is understood that the scope of the present disclosure also includes these.

In the above embodiment, the information processing apparatus 10 is described as supporting at least one of the creation or execution of the program in the block programming language in cooperation with the terminal apparatus 20, but is not limited to this. The information processing apparatus 10 may function as a terminal, not as a server, and may independently support at least one of the creation or execution of the program in the block programming language.

In the above embodiment, the information processing apparatus 10 is described as acquiring the program by receiving the program from the terminal apparatus 20 via the network 30, but is not limited to this. When the information processing apparatus 10 functions as a terminal, the information processing apparatus 10 may directly acquire the program constructed in accordance with the operations of the user using its own input interface.

In the above embodiment, the step block B1 is described as being associated with the first functional block B11, which indicates the transition condition required for the state transition of the program, but is not limited to this. The step block B1 may not be associated with the first functional block B11.

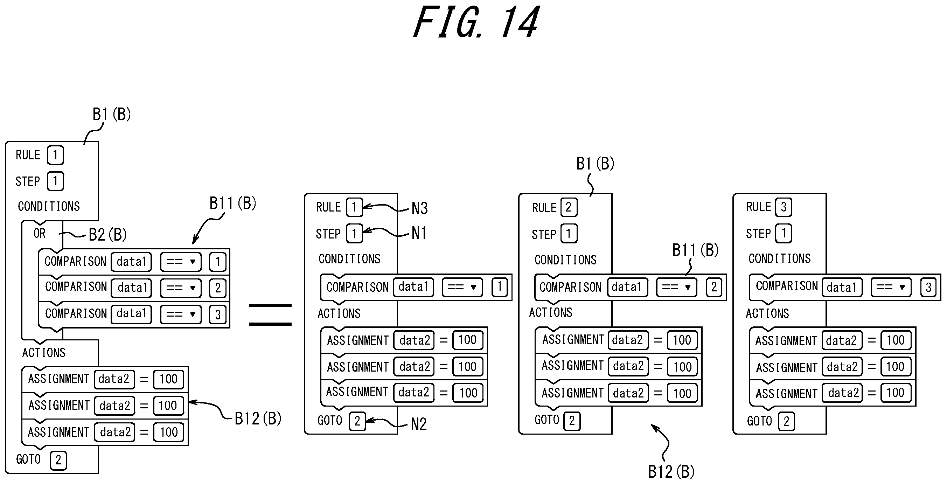

FIG. 14 is a schematic diagram to explain another example of processing by the information processing apparatus in FIG. 2. In the above embodiment, the step block B1 is described as being associated with the multiple first functional blocks B11 that are determined in accordance with the logical operation of AND, but is not limited to this. The step block B1 may be associated with the multiple first functional blocks B11 that are determined in accordance with a logical operation of OR.

As illustrated on the left side of FIG. 14, a step block B1 may be associated with multiple first functional blocks B11 via an OR block B2. When executing a process based on the step block B1, the controller 13 of the information processing apparatus 10 determines whether a transition condition of any of the multiple first functional blocks B11 associated with the step block B1 via the OR block B2 is satisfied. When it is determined that the transition condition of any of the multiple first functional blocks B11 is satisfied, the controller 13 executes the transition process and transfers the process to the next step.

The logical operation function of OR in the step block B1 illustrated on the left side of FIG. 14 is equivalent to a function based on three step blocks B1 illustrated on the right side of FIG. 14. The step block B1 is a single representation of the three step blocks B1 illustrated on the right side. By collecting the logical operation function of OR into the one step block B1 via the OR block B2, the structure of the program is simplified, and its visibility is further improved.

In the above embodiment, the step block B1 is described as being associated with the second functional block B12, which indicates the transition process to be executed before the state transition of the program, but is not limited to this. The step block B1 may not be associated with the second functional block B12.

The step block B1 does not have to be associated with either the first functional block B11 or the second functional block B12, and can be arranged alone in the construction of the program.

In the above embodiment, the step block B1 is described as including the step number N1, which indicates the order in the series of processes, but is not limited to this. The step block B1 may indicate the order in the series of processes in any other method, instead of or in addition to the step number N1. For example, the step block B1 may include a letter, a symbol, or the like different from a numeral, to indicate the order in the series of processes based on the program. Alternatively, the step block B1 may not include any step number N1 or the like to indicate the order in the series of processes.

In the above embodiment, the step block B1 is described as including the step number N2 of the next step block B1 that executes the process subsequently to the state transition of the program, but is not limited to this. The step block B1 may indicate the next step block B1 in any other method instead of or in addition to the step number N2. For example, the step block B1 may include a letter, a symbol, or the like different from a numeral, to indicate the next step block B1. Alternatively, the step block B1 may not include any step number N2 or the like to indicate the next step block B1.

In the above embodiment, the step block B1 is described as including the identification number N3, as the numeral to distinguish the step block B1 from other step blocks B1, but is not limited to this. The identification number N3 may be in any other form, instead of or in addition to a numeral, to distinguish the step block B1 from other step blocks B1. For example, the identification number N3 may include a letter, a symbol, or the like different from a numeral, to distinguish the step block B1 from other step blocks B1. At this time, for example, the priority level may be higher, the earlier the letter, symbol, or the like is ordered. For example, the priority level may be higher, the earlier the alphabetical order of an alphabetic character. Alternatively, the step block B1 may not include any identification number N3 or the like to distinguish the step block B1 from other step blocks B1.

In the above embodiment, the information processing apparatus 10 is described as acquiring the program including the multiple step blocks B1 whose processes are to be executed in parallel with each other, but is not limited to this. The program may not include the multiple step blocks B1 whose processes are to be executed in parallel with each other.

In the above embodiment, the information processing apparatus 10 is described as giving priority to the process of the step block B1 with the lowest identification number N3 when the transition conditions required for the state transitions of the program are satisfied in the multiple step blocks B1, but is not limited to this. The information processing apparatus 10 may give priority to a process of a step block B1 other than the step block B1 with the lowest identification number N3. For example, the information processing apparatus 10 may give priority to a process of a step block B1 with the highest identification number N3.

In the above embodiment, the information processing apparatus 10 is described as causing the terminal apparatus 20, which is communicably connected to the information processing apparatus 10, to display the first screen S2 indicating the execution status of the program, but is not limited to this. The information processing apparatus 10 may not cause the terminal apparatus 20 to display the first screen S2 indicating the execution status of the program. For example, when the information processing apparatus 10 supports only the creation of the program in the block programming language, the information processing apparatus 10 may not cause the terminal apparatus 20 to display the first screen S2.

In the above embodiment, the information processing apparatus 10 is described as causing the terminal apparatus 20 to display the second screen S3 for editing the variable, which is required in the execute of the program and is used in the step blocks B1, but is not limited to this. The information processing apparatus 10 may not cause the terminal apparatus 20 to display the second screen S3. For example, when the information processing apparatus 10 supports only the creation of the program in the block programming language, the information processing apparatus 10 may not cause the terminal apparatus 20 to display the second screen S3.

In the above embodiment, the information processing apparatus 10 is described as causing the terminal apparatus 20 to display the third screen S4 that indicates the instruction based on the execution of the program and the comment from the user on the instruction, but is not limited to this. The information processing apparatus 10 may not cause the terminal apparatus 20 to display the third screen S4. For example, when the information processing apparatus 10 supports only the creation of the program in the block programming language, the information processing apparatus 10 may not cause the terminal apparatus 20 to display the third screen S4.

In the above embodiment, the information processing apparatus 10 is described as causing the terminal apparatus 20 to display the fourth screen S1 for constructing the program in accordance with the operations of the user using the terminal apparatus 20, but is not limited to this. The information processing apparatus 10 may not cause the terminal apparatus 20 to display the fourth screen S1. For example, when the information processing apparatus 10 supports only the execution of the program in the block programming language, the information processing apparatus 10 may not cause the terminal apparatus 20 to display the fourth screen S1.

In the above embodiment, the fourth screen S1 is described as including the selection area A1 and the construction area A2, but is not limited to this. The fourth screen S1 may be configured in any other form. For example, the fourth screen S1 may be configured so that an area for selecting the certain functional block B, from among the multiple functional blocks B, and an area for constructing the program by arranging the selected functional block B for each step block B1 coincide with each other.

In the above embodiment, the program is described as being constructed by the drag-and-drop operations by the user using the mouse included in the input interface 23 of the terminal apparatus 20, but is not limited to this. The program may be constructed based on any other operations. For example, the program may be constructed based on voice input operations of the user using the microphone included in the input interface 23 of the terminal apparatus 20.

Some embodiments of the present disclosure are exemplified below. It is noted, however, embodiments of the present disclosure are not limited to these.

### [Appendix 1]

An information processing apparatus configured to support at least one of creation or execution of a program in a block programming language, the information processing apparatus comprising:
a controller configured to acquire the program that includes one or more step blocks, each as one of functional blocks, each of the step blocks collectively associating a part of processes among a series of processes based on the program, the series of processes being executed in accordance with a state transition from one of the step blocks to another of the step blocks.

### [Appendix 2]

The information processing apparatus according to appendix 1, wherein each of the step blocks is associated with a first functional block that indicates a transition condition required for the state transition.

### [Appendix 3]

The information processing apparatus according to appendix 2, wherein each of the step blocks is associated with multiple first functional blocks to be determined in accordance with a logical operation of AND or OR.

### [Appendix 4]

The information processing apparatus according to any one of appendices 1 to 3, wherein each of the step blocks is associated with a second functional block that indicates a transition process to be executed before the state transition.

### [Appendix 5]

The information processing apparatus according to any one of appendices 1 to 4, wherein each of the step blocks includes a step number that indicates order in the series of processes.

### [Appendix 6]

The information processing apparatus according to appendix 5, wherein each of the step blocks includes a step number of a next step block that executes a process subsequently to the state transition.

### [Appendix 7]

The information processing apparatus according to any one of appendices 1 to 6, wherein each of the step blocks includes an identification number to distinguish the step block from other step blocks.

### [Appendix 8]

The information processing apparatus according to appendix 7, wherein the controller is configured to acquire the program that includes a plurality of the step blocks whose processes are to be executed in parallel with each other.

### [Appendix 9]

The information processing apparatus according to appendix 8, wherein
the identification number includes a priority level that indicates priority of a process to be executed when transition conditions required for state transitions are satisfied in the plurality of the step blocks, and
the controller is configured to execute a process of one step block, out of the plurality of the step blocks, based on the priority level.

### [Appendix 10]

The information processing apparatus according to any one of appendices 1 to 9, wherein the controller is configured to cause a terminal apparatus to display a first screen that indicates an execution status of the program, the terminal apparatus being communicably connected to the information processing apparatus.

### [Appendix 11]

The information processing apparatus according to appendix 10, wherein the controller is configured to cause the terminal apparatus to display a second screen for editing a variable that is required in the execution of the program and is used in the step blocks.

### [Appendix 12]

The information processing apparatus according to appendix 10 or 11, wherein the controller is configured to cause the terminal apparatus to display a third screen that indicates an instruction based on the execution of the program and a comment from a user on the instruction.

### [Appendix 13]

The information processing apparatus according to any one of appendices 10 to 12, wherein the controller is configured to cause the terminal apparatus to display a fourth screen for constructing the program in accordance with an operation of a user using the terminal apparatus.

### [Appendix 14]

The information processing apparatus according to appendix 13, wherein the fourth screen includes a selection area to select a certain functional block, from among the multiple functional blocks, and a construction area to construct the program by arranging the selected functional block for each of the step blocks.

### [Appendix 15]

An information processing method for supporting at least one of creation or execution of a program in a block programming language, the information processing method comprising:
acquiring the program that includes one or more step blocks, each as one of functional blocks, each of the step blocks collectively associating a part of processes among a series of processes based on the program, the series of processes being executed in accordance with a state transition from one of the step blocks to another of the step blocks.

### [Appendix 16]

A program configured to cause an information processing apparatus to execute an operation, the information processing apparatus is configured to support at least one of creation or execution of a program in a block programming language, the operation comprising:
acquiring the program that includes one or more step blocks, each as one of functional blocks, each of the step blocks collectively associating a part of processes among a series of processes based on the program, the series of processes being executed in accordance with a state transition from one of the step blocks to another of the step blocks.

## Claims

1. An information processing apparatus configured to support at least one of creation or execution of a program in a block programming language, the information processing apparatus comprising:
a controller configured to acquire the program that includes one or more step blocks, each as one of functional blocks, each of the step blocks collectively associating a part of processes among a series of processes based on the program, the series of processes being executed in accordance with a state transition from one of the step blocks to another of the step blocks.

2. The information processing apparatus according to claim 1, wherein each of the step blocks is associated with a first functional block that indicates a transition condition required for the state transition.

3. The information processing apparatus according to claim 2, wherein each of the step blocks is associated with multiple first functional blocks to be determined in accordance with a logical operation of AND or OR.

4. The information processing apparatus according to any one of claims 1 to 3, wherein each of the step blocks is associated with a second functional block that indicates a transition process to be executed before the state transition.

5. The information processing apparatus according to any one of claims 1 to 3, wherein each of the step blocks includes a step number that indicates order in the series of processes.

6. The information processing apparatus according to claim 5, wherein each of the step blocks includes a step number of a next step block that executes a process subsequently to the state transition.

7. The information processing apparatus according to any one of claims 1 to 3, wherein each of the step blocks includes an identification number to distinguish the step block from other step blocks.

8. The information processing apparatus according to claim 7, wherein the controller is configured to acquire the program that includes a plurality of the step blocks whose processes are to be executed in parallel with each other.

9. The information processing apparatus according to claim 8, wherein
the identification number includes a priority level that indicates priority of a process to be executed when transition conditions required for state transitions are satisfied in the plurality of the step blocks, and
the controller is configured to execute a process of one step block, out of the plurality of the step blocks, based on the priority level.

10. The information processing apparatus according to any one of claims 1 to 3, wherein the controller is configured to cause a terminal apparatus to display a first screen that indicates an execution status of the program, the terminal apparatus being communicably connected to the information processing apparatus.

11. The information processing apparatus according to claim 10, wherein the controller is configured to cause the terminal apparatus to display a second screen for editing a variable that is required in the execution of the program and is used in the step blocks.

12. The information processing apparatus according to claim 10, wherein the controller is configured to cause the terminal apparatus to display a third screen that indicates an instruction based on the execution of the program and a comment from a user on the instruction.

13. The information processing apparatus according to claim 10, wherein the controller is configured to cause the terminal apparatus to display a fourth screen for constructing the program in accordance with an operation of a user using the terminal apparatus.

14. The information processing apparatus according to claim 13, wherein the fourth screen includes a selection area to select a certain functional block, from among the multiple functional blocks, and a construction area to construct the program by arranging the selected functional block for each of the step blocks.

15. An information processing method for supporting at least one of creation or execution of a program in a block programming language, the information processing method comprising:
acquiring the program that includes one or more step blocks, each as one of functional blocks, each of the step blocks collectively associating a part of processes among a series of processes based on the program, the series of processes being executed in accordance with a state transition from one of the step blocks to another of the step blocks.

16. A program configured to cause an information processing apparatus to execute an operation, the information processing apparatus is configured to support at least one of creation or execution of a program in a block programming language, the operation comprising:
acquiring the program that includes one or more step blocks, each as one of functional blocks, each of the step blocks collectively associating a part of processes among a series of processes based on the program, the series of processes being executed in accordance with a state transition from one of the step blocks to another of the step blocks.
